# EUROPEAN PATENT APPLICATION

(11) **EP 4 513 477 A1**
(43) Date of publication of application: **26.02.2025**
(21) Application number: 23915745.6
(22) Date of filing: 06.12.2023
(51) Int. Cl.: G09G 3/34, G09G 5/10, H04M 1/725

(54) **SCREEN BRIGHTNESS ADJUSTMENT METHOD, ELECTRONIC DEVICE, AND STORAGE MEDIUM**

(30) Priority: 12.01.2023 CN 202310072950
(71) Applicant: Honor Device Co., Ltd., Shenzhen, Guangdong 518040 (CN)
(72) Inventor: LI, Kai, Shenzhen, Guangdong 518040 (CN); AN, Peng, Shenzhen, Guangdong 518040 (CN)
(74) Representative: Isarpatent
(86) International application number: PCT/CN2023/136804
(87) International publication number: WO 2024/148987

(57) **Abstract**

This application provides a screen brightness adjustment method, an electronic device, and a storage medium. The method may be applied to an electronic device, and the electronic device includes a screen and an ambient light sensor. The method includes: receiving a first preset operation of turning on the screen by a user; in response to the first preset operation, collecting first light intensity data by using the ambient light sensor, where the first light intensity data is used to update backlight brightness of the screen; turning on the screen by using first backlight brightness corresponding to the first light intensity data; and periodically collecting, after the screen is turned on, second light intensity data by using the ambient light sensor, and adjusting the backlight brightness of the screen by using second backlight brightness corresponding to the second light intensity data. In this way, impact of a light intensity difference of ambient light on screen brightness can be reduced.

## Description

This application claims priority to Chinese Patent Application No. 202310072950.4, filed with the China National Intellectual Property Administration on January 12, 2023 and entitled "SCREEN BRIGHTNESS ADJUSTMENT METHOD, ELECTRONIC DEVICE, AND STORAGE MEDIUM", which is incorporated herein by reference in its entirety.

### TECHNICAL FIELD

This application relates to the field of terminal technologies, and in particular, to a screen brightness adjustment method, an electronic device, and a storage medium.

### BACKGROUND

Currently, most electronic devices configured with screens provide an automatic adjustment mode of screen brightness. For example, an ambient light sensor (Ambient Light Sensor, ALS) is disposed in the electronic device. The electronic device may measure light intensity of current ambient light by using the ALS. When the light intensity of the current ambient light increases, the electronic device may increase the screen brightness. When the light intensity of the current ambient light decreases, the electronic device may reduce the screen brightness. In this way, screen brightness requirements of human eyes in an environment with various light intensities can be met, so that user experience is improved.

However, in the automatic adjustment mode of screen brightness, a dimming value (namely, backlight brightness) used when the electronic device turns on the screen is a dimming value used before the screen is turned off previous time. If a light intensity difference of ambient light existing when the electronic device turns on the screen twice is relatively large, when the electronic device turns on the display screen again, the display screen may be excessively bright or excessively dark, resulting in poor user experience.

### SUMMARY

In view of this, this application provides a screen brightness adjustment method, an electronic device, and a storage medium, to reduce impact of a light intensity difference of ambient light on screen brightness.

According to a first aspect, this application provides a screen brightness adjustment method. The method may be applied to an electronic device. The electronic device includes a screen and an ambient light sensor. The electronic device receives a first preset operation of turning on the screen by a user. In response to the first preset operation, the electronic device may collect first light intensity data of current ambient light by using the ALS. The first light intensity data is used to update backlight brightness of the screen of the electronic device, to implement pre-dimming of the screen. When the electronic device turns on the screen, the electronic device turns on the screen by using first backlight brightness corresponding to the first light intensity data. After the electronic device turns on the screen, the electronic device may periodically collect second light intensity data of the current ambient light by using the ALS, and adjust the backlight brightness of the screen by using second backlight brightness corresponding to the second light intensity data, to implement an automatic adjustment to screen brightness after the screen is turned on.

In this manner, after receiving the first preset operation of turning on the screen by the user, the electronic device first performs pre-dimming. When an automatic adjustment function of screen brightness is not enabled, the first light intensity of the current ambient light is collected before the screen is turned on. To turn on the screen, the first backlight brightness corresponding to the first light intensity may be directly used. In this way, even if a light intensity difference of ambient light existing when the screen is turned on twice is relatively large, the electronic device can turn on the screen by using appropriate backlight brightness, to reduce impact of the light intensity difference of the ambient light on the screen brightness, and reduce cases that the screen is excessively bright or excessively dark due to the light intensity difference of the ambient light existing when the electronic device turns on the screen twice, so that the screen brightness of the electronic device can remain relatively stable, thereby improving user experience.

In a possible implementation of the first aspect, the electronic device periodically collects the second light intensity data based on a first preset period by using the ambient light sensor. The electronic device adjusts the backlight brightness of the screen based on a second preset period by using second backlight brightness corresponding to second light intensity data that meets a preset condition in the second preset period. The second preset period includes n first preset periods. The second light intensity data that meets the preset condition in the second preset period is smallest second light intensity data in n pieces of second light intensity data collected in the n first preset periods.

In this manner, the electronic device can make the backlight brightness of the screen more suitable for a current environment by using accurate second light intensity data, to more accurately adjust the backlight brightness of the screen and improve user experience.

In another possible implementation of the first aspect, after first preset duration starting from a moment at which the screen is turned on, the electronic device periodically collects the second light intensity data by using the ambient light sensor, and adjusts the backlight brightness of the screen by using the second backlight brightness corresponding to the second light intensity data.

In this manner, the electronic device can reduce power consumption of collecting light intensity data by using the ALS, and can further reduce jump phenomena of the backlight brightness of the screen caused by an excessively long time interval between collection of the first light intensity data and collection of the second light intensity data.

In another possible implementation of the first aspect, after second preset duration starting from a moment at which the first preset operation is received, the electronic device turns on the screen by using the first backlight brightness corresponding to the first light intensity data. Herein, after the electronic device receives the first preset operation of turning on the screen by the user, the screen of the electronic device is still in a screen-off state in the second preset duration because there is a delay in turning on the screen. Before the electronic device turns on the screen, the electronic device may collect the first light intensity data by using the ALS. The first light intensity data may not be affected by screen backlight. The first backlight brightness corresponding to the first light intensity data is more suitable for the current environment.

In another possible implementation of the first aspect, after the collecting first light intensity data by using the ambient light sensor, and before the turning on the screen by using first backlight brightness corresponding to the first light intensity data, the electronic device may further start a dimming timer. The dimming timer is used to time the first preset duration and the second preset duration.

Starting the dimming timer by the electronic device may be used as an initial step for enabling the automatic adjustment function of screen brightness. Before turning on the screen, the electronic device enables the automatic adjustment function of screen brightness by starting the dimming timer. After the screen is turned on, the electronic device may collect the second light intensity data in a timely manner, to adjust the backlight brightness of the screen in a timely manner by using the second backlight brightness corresponding to the second light intensity data, thereby improving user experience.

In another possible implementation of the first aspect, after the periodically collecting, after the screen is turned on, second light intensity data by using the ambient light sensor, and adjusting the backlight brightness of the screen by using second backlight brightness corresponding to the second light intensity data, in response to the screen being turned off, the electronic device stops periodically collecting the second light intensity data by using the ambient light sensor. When the screen is turned off, the electronic device disables the automatic adjustment function of screen brightness, so that power consumption of the electronic device can be reduced, and a battery life of the electronic device can be extended.

In another possible implementation of the first aspect, the electronic device is a smartwatch. A battery capacity of the smartwatch is often limited because the smartwatch is limited in terms of volume, appearance, and the like. According to the method provided in this application, a more perfect automatic adjustment to screen brightness of the smartwatch is implemented with minimal impact on a battery life of the smartwatch.

In another possible implementation of the first aspect, the first preset operation is a wrist lifting operation performed by the user after the user wears the smartwatch or a tap operation performed by the user on the smartwatch. The smartwatch can provide, for the user, a plurality of manners of turning on the screen.

According to a second aspect, this application provides an electronic device. The electronic device includes a memory and one or more processors. The memory is coupled to the processor. The memory stores computer program code, the computer program code includes computer instructions, and when the computer instructions are executed by the processor, the electronic device is enabled to perform the method described in any one of the first aspect and the possible implementations of the first aspect.

According to a third aspect, this application provides an electronic device. The electronic device includes a memory and one or more processors. The memory is coupled to the processor. The memory stores computer program code, the computer program code includes computer instructions, and when the computer instructions are executed by the processor, the electronic device is enabled to perform the following steps: receiving a first preset operation of turning on a screen by a user; in response to the first preset operation, collecting first light intensity data by using an ambient light sensor, where the first light intensity data is used to update backlight brightness of the screen; turning on the screen by using first backlight brightness corresponding to the first light intensity data; and periodically collecting, after the screen is turned on, second light intensity data by using the ambient light sensor, and adjusting the backlight brightness of the screen by using second backlight brightness corresponding to the second light intensity data.

In a possible implementation of the third aspect, when the computer instructions are executed by the processor, the electronic device is enabled to further perform the following steps: periodically collecting the second light intensity data based on a first preset period by using the ambient light sensor; and adjusting the backlight brightness of the screen based on a second preset period by using second backlight brightness corresponding to second light intensity data that meets a preset condition in the second preset period. The second preset period includes n first preset periods, the second light intensity data that meets the preset condition in the second preset period is smallest second light intensity data in n pieces of second light intensity data collected in the n first preset periods, and n is a positive integer.

In another possible implementation of the third aspect, when the computer instructions are executed by the processor, the electronic device is enabled to further perform the following steps: after first preset duration starting from a moment at which the screen is turned on, periodically collecting the second light intensity data by using the ambient light sensor, and adjusting the backlight brightness of the screen by using the second backlight brightness corresponding to the second light intensity data.

In another possible implementation of the third aspect, when the computer instructions are executed by the processor, the electronic device is enabled to further perform the following step: after second preset duration starting from a moment at which the first preset operation is received, turning on the screen by using the first backlight brightness corresponding to the first light intensity data.

In another possible implementation of the third aspect, when the computer instructions are executed by the processor, the electronic device is enabled to further perform the following step: after the collecting first light intensity data by using the ambient light sensor, and before the turning on the screen by using first backlight brightness corresponding to the first light intensity data, starting a dimming timer. The dimming timer is used to time the first preset duration and the second preset duration.

In another possible implementation of the third aspect, when the computer instructions are executed by the processor, the electronic device is enabled to further perform the following step: after the periodically collecting, after the screen is turned on, second light intensity data by using the ambient light sensor, and adjusting the backlight brightness of the screen by using second backlight brightness corresponding to the second light intensity data, in response to the screen being turned off, stopping periodically collecting the second light intensity data by using the ambient light sensor.

In another possible implementation of the third aspect, the electronic device is a smartwatch.

In another possible implementation of the third aspect, the first preset operation is a wrist lifting operation performed by the user after the user wears the smartwatch or a tap operation performed by the user on the smartwatch.

According to a fourth aspect, this application provides a computer-readable storage medium, including computer instructions. When the computer instructions are run on an electronic device, the electronic device is enabled to perform the method described in any one of the first aspect and the possible implementations of the first aspect.

According to a fifth aspect, this application provides a computer program product including program instructions. When the computer program product runs on a computer, the computer is enabled to perform the method described in any one of the first aspect and the possible implementations of the first aspect.

### BRIEF DESCRIPTION OF DRAWINGS

FIG. 1 is a schematic diagram of receiving a tap of a user on a screen by a smartwatch according to an embodiment of this application;
FIG. 2 is a schematic diagram of an example of an automatic adjustment process of screen brightness according to an embodiment of this application;
FIG. 3 is a block diagram of a hardware structure of an example of an electronic device according to an embodiment of this application;
FIG. 4 is a flowchart of an example of a screen brightness adjustment method according to an embodiment of this application;
FIG. 5 is a schematic diagram of another example of an automatic adjustment process of screen brightness according to an embodiment of this application;
FIG. 6 is a flowchart of another example of a screen brightness adjustment method according to an embodiment of this application; and
FIG. 7 is a schematic diagram of an example of interaction of software and hardware modules of a smartwatch according to an embodiment of this application.

### DESCRIPTION OF EMBODIMENTS

To ensure human eye comfort in the case of an ambient light-based change in backlight brightness of a screen of an electronic device, the electronic device may provide an automatic adjustment mode and a constant mode of screen brightness. A user may perform selection based on an actual requirement. In the automatic adjustment mode of screen brightness, after turning on the screen, the electronic device may automatically adjust the backlight brightness of the screen. When light intensity of current ambient light increases, the electronic device may increase the screen brightness. When the light intensity of the current ambient light decreases, the electronic device may reduce the screen brightness. In the constant mode of screen brightness, after the electronic device turns on the screen, the backlight brightness of the screen is constant. The electronic device may set the backlight brightness of the screen based on a user operation of setting the screen brightness by the user.

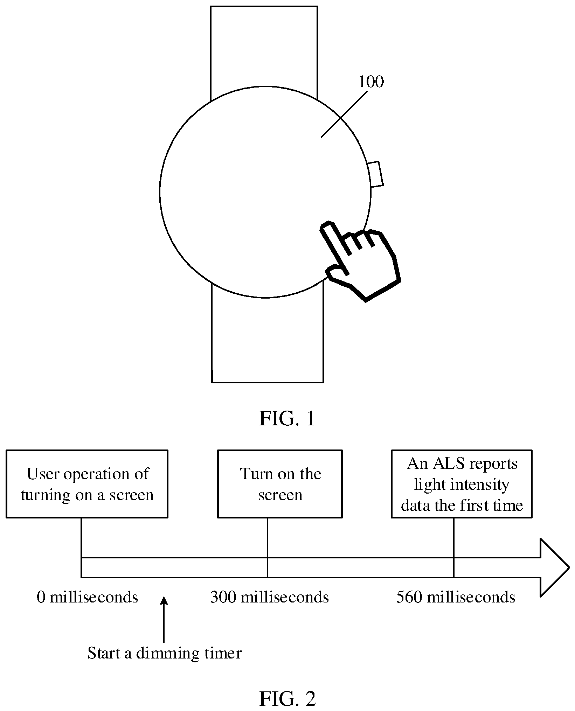

According to a screen brightness adjustment method provided in a related technology, when an electronic device is in an automatic adjustment mode of screen brightness, the electronic device may automatically adjust backlight brightness of a screen based on light intensity data of ambient light. For example, the electronic device is a smartwatch 100 shown in FIG. 1. A user wears the smartwatch 100. The smartwatch 100 may be in the automatic adjustment mode of screen brightness. The smartwatch 100 receives a user operation of tapping a screen of the smartwatch 100 by the user. In response to the user operation, the smartwatch 100 turns on the screen, and enables an automatic adjustment function of screen brightness, to adjust backlight brightness of the screen in real time based on light intensity data of ambient light. The automatic adjustment function of screen brightness may be used to automatically adjust the backlight brightness of the screen based on light intensity data of a current environment. However, in this dimming solution using the automatic adjustment mode, a dimming value (namely, backlight brightness) used when the electronic device (for example, the smartwatch 100) turns on the screen is a dimming value used before the screen is turned off previous time. If a light intensity difference of ambient light existing when the screen is turned on twice is relatively large, when the electronic device (for example, the smartwatch 100) turns on the display screen again, the display screen may be excessively bright or excessively dark, resulting in poor user experience.

For ease of understanding, the screen brightness adjustment solution in the related technology is described in detail herein in the embodiments of this application. A process in which an electronic device automatically adjusts screen brightness is as follows:
1. The electronic device receives a user operation of turning on a screen by a user. 2. The electronic device starts a dimming timer in response to the user operation. The dimming timer starts timing. 3. The electronic device turns on the screen by using a dimming value last used before the screen is turned off previous time. 4. The electronic device starts a sampling timer when timing duration of the dimming timer reaches preset dimming duration (for example, 500 milliseconds). The sampling timer starts to periodically perform timing based on a first preset period. 5. Each time timing duration of the sampling timer reaches one first preset period (for example, 20 milliseconds), the electronic device collects light intensity data once by using an ALS. After the sampling timer performs timing for a plurality of first preset periods, the ALS reports smallest light intensity data in light intensity data obtained through a plurality of times of sampling. After the plurality of first preset periods, the electronic device obtains one piece of light intensity data (namely, the smallest light intensity data in the light intensity data obtained through the plurality of times of sampling that is reported by the ALS). 6. The electronic device adjusts backlight brightness of the screen based on the smallest light intensity data in the light intensity data obtained through the plurality of times of sampling that is reported by the ALS, and stores a dimming value (namely, backlight brightness) obtained through the current screen brightness adjustment. In this way, one adjustment operation on the backlight brightness of the screen is implemented (or one dimming operation is implemented). 7. When the screen is in a screen-on state, the electronic device adjusts the backlight brightness of the screen based on the light intensity data periodically reported by the ALS. In other words, the electronic device may repeatedly perform step 5 and step 6 until the screen of the electronic device is turned off.

In this way, the electronic device implements an automatic adjustment to the screen brightness. Screen brightness last stored before the screen of the electronic device is turned off may be used as backlight brightness for turning on the screen next time.

It may be understood that to reduce power consumption of the electronic device, in consideration of both a dimming effect of the electronic device and a characteristic of awareness insensitivity of human eyes to the screen brightness, the ALS of the electronic device starts to collect light intensity data only after the timing duration of the dimming timer reaches the preset dimming timing duration. Considering that the light intensity data collected by the ALS may be affected by the backlight brightness of the screen, to improve accuracy of the light intensity data, after the plurality of times of sampling in the plurality of first preset periods, the ALS of the electronic device reports the smallest light intensity data in the light intensity data obtained through the plurality of times of sampling, to reduce impact of the backlight brightness of the screen on the collected light intensity data.

It can be learned from the foregoing automatic adjustment process of the screen brightness that the electronic device does not perform the adjustment operation on the backlight brightness of the screen the first time immediately after the user operation of turning on the screen by the user is received and the screen is turned on, but performs the adjustment operation after a specific time delay. For example, as shown in FIG. 2, a moment at which the electronic device receives the user operation is used as a start moment (that is, 0 milliseconds). In response to the user operation, the electronic device starts the dimming timer (in other words, enables an automatic adjustment function of screen brightness), and turns on the screen. The electronic device turns on the screen with a delay of approximately 250 milliseconds to 300 milliseconds. When the timing duration of the dimming timer of the electronic device reaches the preset dimming duration of 500 milliseconds, the ALS of the electronic device collects light intensity data of current ambient light three times by using 20 milliseconds as one first preset period, and reports smallest light intensity data in the light intensity data collected three times. It takes 60 milliseconds for the ALS to collect the light intensity data three times. Therefore, at least 560 milliseconds are required before the ALS of the electronic device reports the light intensity data the first time. The electronic device does not start to adjust the backlight brightness of the screen until at least 260 milliseconds elapse after the electronic device turns on the screen.

If a light intensity difference of ambient light existing when the electronic device turns on the screen twice is relatively large, because backlight brightness used when the electronic device turns on the screen is backlight brightness last stored before the screen of the electronic device is turned off previous time, and the electronic device does not adjust the backlight brightness of the screen immediately after the screen is turned on, when screen backlight may be excessively bright or excessively dark when the electronic device turns on the screen. Then the electronic device starts to automatically adjust the screen brightness after specific duration elapses, affecting user experience.

In view of this, the embodiments of this application provide a screen brightness adjustment method. The method may be applied to an electronic device. The electronic device receives a first preset operation of turning on a screen by a user. In response to the first preset operation, the electronic device may collect first light intensity data of current ambient light by using an ALS. The first light intensity data is used to update backlight brightness of the screen of the electronic device, to implement pre-dimming of the screen. When the electronic device turns on the screen, the electronic device turns on the screen by using first backlight brightness corresponding to the first light intensity data. After the electronic device turns on the screen, the electronic device may periodically collect second light intensity data of the current ambient light by using the ALS, and adjust the backlight brightness of the screen by using second backlight brightness corresponding to the second light intensity data, to implement an automatic adjustment to screen brightness after the screen is turned on.

In this manner, after receiving the first preset operation of turning on the screen by the user, the electronic device first performs pre-dimming. When an automatic adjustment function of screen brightness is not enabled, the first light intensity of the current ambient light is collected before the screen is turned on. To turn on the screen, the first backlight brightness corresponding to the first light intensity may be directly used. In this way, even if a light intensity difference of ambient light existing when the screen is turned on twice is relatively large, the electronic device can turn on the screen by using appropriate backlight brightness, to reduce impact of the light intensity difference of the ambient light on the screen brightness, and reduce cases that the screen is excessively bright or excessively dark due to the light intensity difference of the ambient light existing when the electronic device turns on the screen twice, so that the screen brightness of the electronic device can remain relatively stable, thereby improving user experience.

For example, the electronic device in the embodiments of this application may be a device such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/a virtual reality (virtual reality, VR) device, a media player, a television, a smartwatch, or a smart band.

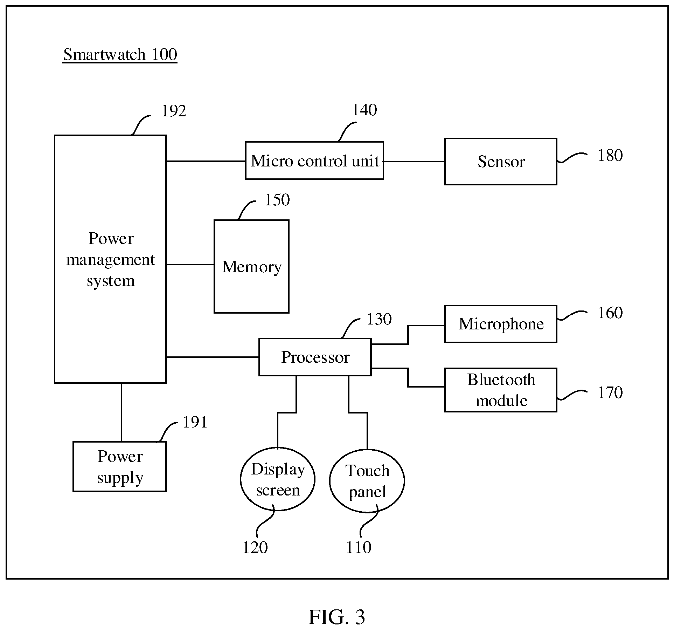

A structure of the electronic device provided in the embodiments of this application is described by using an example in which the electronic device is the foregoing smartwatch 100. It should be understood that the smartwatch 100 shown in the figure is only an example of the electronic device, and the smartwatch 100 may have more or fewer components than those shown in the figure, or may combine two or more components, or may have different component configurations. The components shown in FIG. 3 may be implemented in hardware that includes one or more signal processing and/or application-specific integrated circuits, software, or a combination of hardware and software.

As shown in FIG. 3, the smartwatch 100 includes a watch body and a wrist strap that are connected to each other. The watch body may include a front housing (not shown in FIG. 3), a touch panel 110 (also referred to as a touchscreen), a display screen 120, a bottom housing (not shown in FIG. 3), a processor 130, a micro control unit (Micro Control Unit, MCU) 140, a memory 150, a microphone (Microphone, MIC) 160, a Bluetooth module 170, a sensor 180, a power supply 191, a power management system 192, and the like. Although not shown, the smartwatch 100 may further include a key, an antenna, a Wi-Fi module, a GPS module, a loudspeaker, an accelerometer, a gyroscope, and the like. A person skilled in the art may understand that the structure of the smartwatch 100 shown in FIG. 3 does not constitute a limitation on the smartwatch 100. The smartwatch may include more or fewer components than those shown in the figure, or combine some components, or have different component arrangements.

The following separately describes functional components of the smartwatch 100.

The touch panel 110, also referred to as a touchpad, may collect a touch operation performed by a user of the watch on the touch panel 110 (such as an operation of the user on or near the touch panel 110 by using any suitable object or accessory such as a finger or a stylus), and drive a corresponding connection apparatus based on a preset program. Optionally, the touch panel 110 may include two parts: a touch detection apparatus and a touch controller. The touch detection apparatus detects a touch position of the user and a signal brought by the touch operation, and sends the signal to the touch controller. The touch controller receives touch information from the touch detection apparatus, converts the touch information into touch point coordinates, sends the touch point coordinates to the processor 130, and can receive and execute a command sent by the processor 130. In addition, the touch panel 110 may be implemented as a resistive type, a capacitive type, an infrared type, a surface acoustic wave type, or the like. In addition to the touch panel 110, the smartwatch may further include another input device. The another input device may include but is not limited to a function key (such as a volume control key or an on/off key).

The display screen 120, also referred to as a screen, may be configured to display information entered by the user or information provided for the user and various menus of the watch. Optionally, the display screen 120 may be configured in a form of a liquid crystal display (Liquid Crystal Display, LCD), an organic light-emitting diode (Organic Light-Emitting Diode, OLED), or the like. Further, the touch panel 110 may cover the display screen 120. After detecting a touch operation on or near the touch panel, the touch panel 110 transfers the touch operation to the processor 130, to determine a type of a touch event. Then the processor 130 provides a corresponding visual output on the display screen 120 based on the type of the touch event. Although in FIG. 3, the touch panel 110 and the display screen 120 respectively implement input and output functions of the watch as two independent components, in some embodiments, the touch panel 110 and the display screen 120 may be integrated to implement the input and output functions of the watch.

The processor 130 is configured to: perform system scheduling, control the display screen 120 and the touch panel 110, and support processing of the microphone 160, one or more thin film actuators, the Bluetooth module 170, and the like.

The microphone 160 is also referred to as a mic. The microphone 160 may convert a collected sound signal into an electrical signal, and the electrical signal is received by an audio circuit and converted into audio data. The audio circuit may also convert audio data into an electrical signal, and the electrical signal is transmitted to the loudspeaker and converted into a sound signal by the loudspeaker for output.

For the Bluetooth module 170, the smartwatch may exchange information with another electronic device (such as a mobile phone or a tablet computer) by using the Bluetooth module 170, and connect to a network and connect to a server by using the electronic device, to process functions such as voice recognition.

The micro control unit 140 is configured to: control the sensor 180, perform an operation on sensor data, communicate with the processor 130, and perform another function. The smartwatch 100 may perform an operation on light intensity data by using the micro control unit 140 to obtain backlight brightness corresponding to the light intensity data.

The sensor 180 may be a heart rate detection sensor, a barometric pressure sensor, a gravity sensor, a light sensor, a motion sensor, an acceleration sensor, or another sensor. The smartwatch may include a plurality of sensors 180. Specifically, the light sensor may include an ambient light sensor and a proximity sensor. The ambient light sensor ALS may collect light intensity data of ambient light. The smartwatch 100 may adjust backlight brightness of the display screen 120 based on the light intensity data collected by the ambient light sensor. The acceleration sensor may collect acceleration data of the smartwatch 100. The smartwatch 100 may identify a gesture operation of the user based on the acceleration data collected by the acceleration sensor. For other sensors such as a gyroscope, a barometer, a hygrometer, a thermometer, and an infrared sensor that may be further configured on the watch, details are not described herein again.

The memory 150 may be configured to store a software program and data. The processor 130 performs various function applications and data processing of the watch by running the software program and the data that are stored in the memory 150. The memory 150 mainly includes a program storage area and a data storage area. The program storage area may store an operating system and an application required by at least one function (for example, a sound playing function and an image playing function). The data storage area may store data (for example, audio data and a phone book) created based on the use of the watch. In addition, the memory 150 may include a high-speed random access memory, and may further include a non-volatile memory, for example, a magnetic disk storage device, a flash memory device, or another volatile solid-state storage device.

The smartwatch 100 further includes the power supply 191 (such as a battery) for supplying power to the components. Optionally, the power supply 191 may be logically connected to the processor 130 by using the power management system 192, thereby implementing functions such as management of charging, discharging, and power consumption by using the power management system 192.

Further, the smartwatch 100 shown in FIG. 3 may further include a radio frequency circuit (not shown in FIG. 3). The radio frequency circuit may be configured to receive and send a signal during information reception and sending or a call process, and may receive downlink information of a base station and then send the downlink information to the processor 130 for processing; and send uplink data to the base station. Generally, the radio frequency circuit includes but is not limited to an antenna and at least one amplifier, transceiver, coupler, low noise amplifier, duplexer, and the like. In addition, the radio frequency circuit may further communicate with a network and another mobile device through wireless communication. Any communication standard or protocol may be used for the wireless communication, and includes but is not limited to a global system for mobile communications, a general packet radio service, code division multiple access, wideband code division multiple access, long term evolution, email, a short messaging service, and the like.

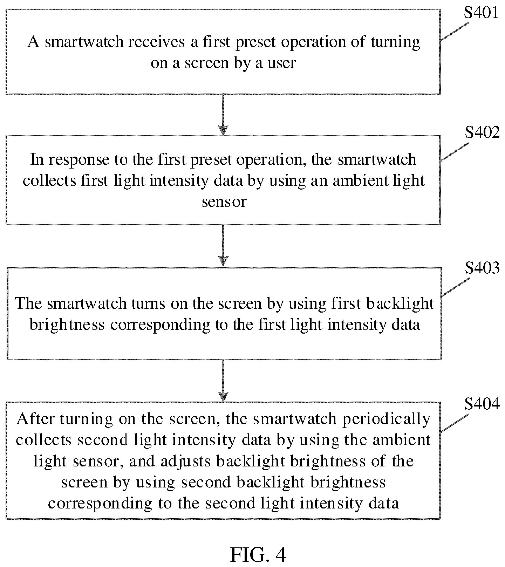

All screen brightness adjustment methods in the following embodiments may be implemented in an electronic device having the foregoing hardware structure. In the following embodiment, the method in the embodiments of this application is described by using an example in which the electronic device is the smartwatch shown in FIG. 3. In this embodiment of this application, the smartwatch is in an automatic adjustment mode of screen brightness. As shown in FIG. 4, the method provided in this embodiment of this application may include the following steps.

S401: The smartwatch receives a first preset operation of turning on a screen by a user.

In this embodiment of this application, the smartwatch may receive the first preset operation of turning on the screen of the smartwatch by the user. The first preset operation may be used to trigger the smartwatch to turn on the screen. For example, the first preset operation may be a tap operation performed by the user on the smartwatch, for example, a tap operation of tapping the screen or a key of the smartwatch. For another example, the first preset operation may be a gesture operation of making a preset gesture (such as a wrist lifting gesture or a wrist shaking gesture) by the user when the smartwatch is in a wearing state, for example, a wrist lifting operation or a wrist shaking operation performed by the user after the user wears the smartwatch. An acceleration sensor may be configured in the smartwatch, and may collect acceleration data of the smartwatch. The smartwatch may identify the gesture operation of the user by using the acceleration data collected by the acceleration sensor.

S402: In response to the first preset operation, the smartwatch collects first light intensity data by using an ambient light sensor.

In this embodiment of this application, the ambient light sensor (ALS) is disposed in the smartwatch. The ambient light sensor may perceive a light status of a surrounding environment, and may be configured to collect light intensity data of ambient light. In response to the first preset operation of turning on the screen by the user, the smartwatch may collect light intensity data of current ambient light by using the ambient light sensor disposed inside the smartwatch, to obtain the first light intensity data. In this embodiment of this application, a process of collecting the first light intensity data by the smartwatch by using the ambient light sensor and performing dimming based on the first light intensity data is referred to as a pre-dimming operation. In other words, the smartwatch may perform the pre-dimming operation in response to the first preset operation.

In some implementations, in response to the first preset operation, the smartwatch may collect the light intensity data of the current ambient light only once by using the ALS. The light intensity data is the first light intensity data. Alternatively, to improve accuracy of the first light intensity data, the smartwatch may collect light intensity data a few times (for example, less than five times) by using the ALS, to obtain a plurality of pieces of light intensity data. For example, the smartwatch collects light intensity data three times, to be specific, collects one piece of light intensity data each time to obtain a total of three pieces of light intensity data. Further, the smartwatch may use an intermediate value or an average value of the plurality of pieces of collected light intensity data as the first light intensity data. In this way, the smartwatch can improve accuracy of the first light intensity data while reducing impact of light intensity data collection on power consumption.

The first light intensity data is used to update backlight brightness of the screen. There is a preset correspondence between light intensity data and backlight brightness of the screen. Therefore, the smartwatch may update the backlight brightness of the screen based on the first light intensity data. In some implementations, after collecting the first light intensity data, the smartwatch may store the first light intensity data, so that when turning on the screen, the smartwatch can update the backlight brightness of the screen by using the first light intensity data.

S403: The smartwatch turns on the screen by using first backlight brightness corresponding to the first light intensity data.

The smartwatch may determine, based on the preset correspondence between light intensity data and backlight brightness of the screen, the first backlight brightness corresponding to the first light intensity data. The smartwatch may prestore the correspondence between light intensity data of ambient light and backlight brightness of the screen. For example, the correspondence may include a plurality of light intensity data ranges, and each light intensity data range corresponds to one type of backlight brightness. The smartwatch may first determine a light intensity data range within which the first light intensity data falls, and then determine first backlight brightness corresponding to the light intensity data range within which the first light intensity data falls. For another example, an LCD module of the smartwatch may prestore a mapping table between light intensity data and backlight brightness. After obtaining the first light intensity data, the smartwatch may query the mapping table provided by the LCD module, to obtain the first backlight brightness corresponding to the first light intensity data. For another example, the smartwatch may prestore a mapping formula between light intensity data and backlight brightness. The smartwatch may calculate, by using the mapping formula, the first backlight brightness corresponding to the first light intensity data.

When turning on the screen, the smartwatch turns on the screen by using the first backlight brightness corresponding to the first light intensity data. Because the first light intensity data is most recently collected light intensity data of a current environment, the first backlight brightness corresponding to the first light intensity data is suitable for the current environment. The smartwatch turns on the screen by using the first backlight brightness suitable for the current environment, to reduce phenomena that the screen is excessively bright or excessively dark due to an environment difference when the smartwatch turns on the screen twice, and reduce brightness jumps of the screen of the smartwatch.

In some implementations, the smartwatch may store a dimming value (namely, backlight brightness) used for each screen brightness adjustment. In this case, before turning on the screen, the smartwatch may determine and store the first backlight brightness corresponding to the first light intensity data, and update the stored dimming value to the first backlight brightness corresponding to the first light intensity data. When the smartwatch turns on the screen, the smartwatch reads an updated dimming value (namely, the first backlight brightness), and turns on the screen by using the updated dimming value.

In some implementations, the smartwatch may not store the dimming value used for each screen brightness adjustment. In this case, when turning on the screen, the smartwatch may determine the first backlight brightness corresponding to the first light intensity data, and turn on the screen by using the first backlight brightness.

S404: After turning on the screen, the smartwatch periodically collects second light intensity data by using the ambient light sensor, and adjusts the backlight brightness of the screen by using second backlight brightness corresponding to the second light intensity data.

In this embodiment of this application, after the smartwatch turns on the screen, the screen of the smartwatch is in a screen-on state. When the smartwatch is in the screen-on state, the smartwatch adjusts the backlight brightness of the screen by using an automatic adjustment function of screen brightness. To be specific, the smartwatch periodically collects the second light intensity data of the current ambient light by using the ALS, and automatically adjusts the backlight brightness of the screen of the smartwatch based on the collected second light intensity data.

For each period, the smartwatch may determine, based on the preset correspondence between light intensity data and backlight brightness, second backlight brightness corresponding to second light intensity data collected in the current period. Further, the smartwatch updates the backlight brightness of the screen to the second backlight brightness corresponding to the second light intensity data. When the screen of the smartwatch is in the screen-on state, the smartwatch may continuously adjust the backlight brightness of the screen by using the second light intensity data collected by the ALS. Before the screen of the smartwatch is turned off, the smartwatch may automatically adjust the backlight brightness of the screen by using the automatic adjustment function of screen brightness.

In some implementations, the smartwatch may enable the automatic adjustment function of screen brightness when turning on the screen. In other words, in S403, turning on the screen by the smartwatch may trigger the smartwatch to enable the automatic adjustment function of screen brightness. In some implementations, the smartwatch may enable the automatic adjustment function of screen brightness before turning on the screen. In other words, before S403, the smartwatch may enable the automatic adjustment function of screen brightness. After enabling the automatic adjustment function of screen brightness, the smartwatch waits for the screen to be turned on. After turning on the screen, the smartwatch adjusts the backlight brightness of the screen by using the automatic adjustment function of screen brightness.

It may be understood that the smartwatch may store a dimming value used for each dimming operation, in other words, the smartwatch may store backlight brightness (which may include the first backlight brightness and the second backlight brightness) used for each screen brightness adjustment. In this case, after the screen of the smartwatch is turned off, the smartwatch stores backlight brightness (namely, the second backlight brightness corresponding to the second light intensity data) corresponding to light intensity data collected last time before the screen is turned off. If the smartwatch directly uses, when turning on the screen again, the backlight brightness corresponding to the light intensity data collected last time before the screen of the smartwatch is turned off, the light intensity data of the ambient light may change because environments in which the smartwatch is located when the screen is turned on twice are different. If the smartwatch turns on the screen by using the backlight brightness corresponding to the light intensity data collected last time before the screen is turned off, the backlight brightness is not suitable for the current environment. When the smartwatch turns on the screen, the backlight brightness of the screen may be excessively dark or excessively bright. In this embodiment of this application, in response to the first preset operation of turning on the screen by the user, before turning on the screen, the smartwatch first collects the first light intensity data of the current environment by using the ALS. When turning on the screen, the smartwatch turns on the screen by using the first backlight brightness corresponding to the first light intensity data of the current environment. In this way, even if the light intensity data of the ambient light changes when the screen is turned on twice, the screen can be turned on again by using the backlight brightness suitable for the current environment.

In some implementations, when the screen of the smartwatch is in the screen-on state, to implement a more accurate automatic adjustment to the backlight brightness, the smartwatch may select, from a plurality of pieces of periodically collected second light intensity data, one or more pieces of accurate second light intensity data as light intensity data used as a basis for the dimming operation. Specifically, S404 may include the following steps:

S4041: The smartwatch periodically collects the second light intensity data based on a first preset period by using the ambient light sensor.

The ALS of the smartwatch may periodically collect the second light intensity data based on the first preset period. The smartwatch collects one piece of second light intensity data in each first preset period. For example, if the first preset period is 20 milliseconds, the smartwatch collects one piece of second light intensity data every 20 milliseconds. Herein, the first preset period may be set based on an actual requirement. For example, the first preset period may be set to 20 milliseconds or 30 milliseconds. A specific value of the first preset period is not limited in this embodiment of this application.

S4042: The smartwatch adjusts the backlight brightness of the screen based on a second preset period by using second backlight brightness corresponding to second light intensity data that meets a preset condition in the second preset period.

The second preset period includes n first preset periods, and n is a positive integer. For each second preset period, the ALS of the smartwatch may periodically collect the second light intensity data of the current environment based on n first preset periods in the second preset period. The ALS of the smartwatch collects one piece of second light intensity data in one first preset period, and collects n pieces of second light intensity data in each second preset period. Then the smartwatch obtains second light intensity data that meets the preset condition from the n pieces of second light intensity data collected in each second preset period. After obtaining, in each second preset period, the second light intensity data that meets the preset condition, the smartwatch may adjust the backlight brightness of the screen by using second backlight brightness corresponding to the second light intensity data that meets the preset condition in the second preset period, to implement an automatic adjustment to the screen brightness of the smartwatch.

For example, the first preset period is 20 milliseconds. The ALS of the smartwatch collects one piece of second light intensity data every 20 milliseconds in each second preset period. The second preset period includes three first preset periods, in other words, the second preset period is 60 milliseconds. In one second preset period, the ALS of the smartwatch collects light intensity data three times to obtain three pieces of second light intensity data. The ALS of the smartwatch may report second light intensity data in the three pieces of second light intensity data that meets the preset condition to a micro control unit of the smartwatch. The micro control unit of the smartwatch sets the backlight brightness of the screen to second light intensity data corresponding to the second light intensity data, to implement an automatic adjustment to the backlight brightness of the screen in one second preset period.

It may be understood that because the screen of the smartwatch is turned on when the smartwatch collects the second light intensity data, the backlight brightness of the screen affects the second light intensity data collected by the ALS, making the second light intensity data collected by the ALS not accurate enough. To accurately adjust the backlight brightness of the screen, the smartwatch may select, in each second preset period, second light intensity data that meets the preset condition, and adjust the backlight brightness of the screen by using second backlight brightness corresponding to the second light intensity data that meets the preset condition. In this way, the smartwatch can make the backlight brightness of the screen more suitable for the current environment by using accurate second light intensity data, to improve user experience.

In some implementations, the preset condition is smallest second light intensity data in n pieces of second light intensity data collected in the n first preset periods. The smartwatch may obtain the smallest second light intensity data in the n pieces of second light intensity data collected in the n first preset periods in the second preset period, and adjust the backlight brightness of the screen based on second backlight brightness corresponding to the second light intensity data.

For example, the second preset period includes three first preset periods. The smartwatch collects one piece of second light intensity data in each first preset period by using the ALS. The smartwatch collects three pieces of second light intensity data in each second preset period by using the ALS. The smartwatch may use smallest second light intensity data in the three pieces of second light intensity data as accurate second light intensity data in the second preset period, and adjust the backlight brightness of the screen by using second backlight brightness corresponding to the second light intensity data.

It may be understood that the screen of the smartwatch is turned on when the smartwatch collects the plurality of pieces of second light intensity data by using the ALS. In this case, the second light intensity data collected by the smartwatch by using the ALS may be enhanced by the backlight brightness of the screen, and the second light intensity data collected by the ALS may not be accurate enough. In the screen-on state, the screen of the smartwatch does not continuously emit light, but continuously flickers at a preset refresh rate (that is, screen flickering). When the preset refresh rate of the screen is greater than a specific refresh rate threshold, human eyes do not perceive a flicker of the screen, and it is considered that the screen is always in the screen-on state. However, actually, the screen alternates between the screen-on state and a blank screen state. The smartwatch uses, as second light intensity data in a second preset period, smallest second light intensity data in a plurality of pieces of second light intensity data collected in the second preset period. The smallest second light intensity data may be light intensity data collected in an interval between two screen-on times of the screen, that is, in the blank screen state of the screen. In this case, the obtained second light intensity data may be considered as the light intensity data of the current ambient light, so that impact of the backlight brightness of the screen on the second light intensity data is reduced.

To collect the second light intensity data when the screen is blank during screen flickering, the first preset period for collecting the second light intensity data by the ALS of the smartwatch is less than a screen refresh period corresponding to the preset refresh rate of the screen. The backlight brightness of the screen is adjusted by using the second backlight brightness corresponding to the smallest second light intensity data in the n pieces of second light intensity data collected in the n first preset periods, so that the backlight brightness of the screen is suitable for the current ambient light, thereby improving screen brightness adjustment accuracy.

In some implementations, the preset condition may be average second light intensity data or intermediate second light intensity data in the n pieces of second light intensity data collected in the n first preset periods. The smartwatch may use, as second light intensity data in the first preset period, an intermediate value or an average value of the n pieces of second light intensity data collected in the n first preset periods in the second preset period. Alternatively, the preset condition may be a preset calculation formula. The smartwatch may alternatively calculate, by using the preset calculation formula and based on the n pieces of second light intensity data that are collected in the n first preset periods, the second light intensity data that meets the preset condition. For example, the smartwatch may calculate a weighted sum of the plurality of pieces of second light intensity data to obtain the second light intensity data that meets the preset condition; or subtract a preset light intensity value from light intensity data obtained by calculating the weighted sum, to obtain the second light intensity data that meets the preset condition. The preset condition may be set based on an actual application scenario or requirement. The preset condition is not limited in this embodiment of this application.

In this embodiment of this application, for a small electronic device such as the smartwatch, a battery capacity of the smartwatch is often limited because the smartwatch is limited in terms of volume, appearance, and the like. To extend a battery life of the smartwatch and reduce power consumption of the smartwatch, the ALS of the smartwatch may start to collect the second luminous intensity data of the current ambient light only after the screen is in the screen-on state for specific duration. Specifically, S404 may include the following step:

S4043: After first preset duration starting from a moment at which the screen is turned on, the smartwatch periodically collects the second light intensity data by using the ambient light sensor, and adjusts the backlight brightness of the screen by using the second backlight brightness corresponding to the second light intensity data.

The first preset duration may be duration between turning on the screen by the smartwatch and starting to collect the second light intensity data by the ALS of the smartwatch. The first preset duration may be set based on an actual application scenario or requirement. The first preset duration is less than a preset time threshold. The first preset duration is usually set to relatively small duration, for example, 200 milliseconds or 300 milliseconds. Because the human eyes are insensitive to the screen brightness, when the backlight brightness of the screen changes slightly in a short time, it is difficult for the human eyes to perceive the change of the backlight brightness of the screen. When turning on the screen, the smartwatch turns on the screen by using the first backlight brightness corresponding to the first light intensity data. The first light intensity data is latest light intensity data that is of the current ambient light and that is collected before the screen is turned on, and the first backlight brightness corresponding to the first light intensity is suitable for the current environment. Because the first preset duration is relatively short, the second light intensity data collected by the smartwatch after the first preset duration starting from the moment at which the screen is turned on does not change greatly compared with the first light intensity data. In this way, the backlight brightness of the screen that is obtained by the smartwatch through adjustment by using the second backlight brightness corresponding to the second light intensity data changes slightly compared with the first backlight brightness corresponding to the first light intensity data used when the smartwatch turns on the screen, and the change is difficult to perceive by the human eyes.

In this manner, the smartwatch can reduce power consumption of collecting light intensity data by using the ALS, and can further reduce jump phenomena of the backlight brightness of the screen caused by an excessively long time interval between collection of the first light intensity data and collection of the second light intensity data.

In this embodiment of this application, after the smartwatch receives the first preset operation of turning on the screen by the user, the screen is not turned on immediately, but there is a response time, in other words, there is a specific time delay in turning on the screen by the smartwatch. Specifically, S403 may include the following step:

S4031: After second preset duration starting from a moment at which the first preset operation is received, the smartwatch turns on the screen by using the first backlight brightness corresponding to the first light intensity data.

The second preset duration may be a time delay in or response duration for turning on the screen by the smartwatch. The second preset duration may be determined based on an actual application situation. For example, the smartwatch receives the first preset operation of turning on the screen by the user, and turns on the screen after a delay of approximately 250 milliseconds to 300 milliseconds. When turning on the screen, the smartwatch may turn on the screen by using the first backlight brightness corresponding to the first light intensity data.

It may be understood that after the smartwatch receives the first preset operation of turning on the screen by the user, the screen of the smartwatch is still in a screen-off state in a short time (that is, in the second preset duration) because there is a delay in turning on the screen. When the screen is still in the screen-off state before the smartwatch turns on the screen, the smartwatch may collect the first light intensity data by using the ALS (in other words, perform S402). In this case, because the screen of the smartwatch is still in the screen-off state, the first light intensity data collected by the ALS may not be affected by screen backlight of the smartwatch. In this way, the smartwatch can perform sampling a few times by using the ALS instead of performing a large quantity of times of sampling. Collecting the first light intensity data has little impact on power consumption of the smartwatch, so that burden on power of the smartwatch that is caused by the pre-dimming operation of the smartwatch is reduced.

In this embodiment of this application, when the screen is in the screen-on state, the smartwatch may continuously adjust the backlight brightness of the screen by using the automatic adjustment function of screen brightness, in other words, perform S404. In some implementations, to collect the second light intensity data in a timely manner after the screen is turned on, the smartwatch may enable the automatic adjustment function of screen brightness before the screen is turned on. When the smartwatch enables the automatic adjustment function of screen brightness, there may be a specific delay in turning on the screen by the smartwatch, and the smartwatch may not collect the second light intensity data of the current environment by using the ALS until the screen is turned on. In other words, the ALS of the smartwatch does not collect the second light intensity data immediately after the automatic adjustment function of screen brightness is enabled, but instead, the ALS collects the second light intensity data only after waiting for specific duration. Specifically, after S402 and before S403, the method provided in this embodiment of this application may further include the following step:

S405: Start a dimming timer, where the dimming timer is used to time the first preset duration and the second preset duration.

The smartwatch includes the dimming timer. The smartwatch may start, by starting the dimming timer, to enable the automatic adjustment function. To be specific, when enabling the automatic adjustment function of screen brightness, the smartwatch first starts the dimming timer, and the dimming timer starts timing. When timing duration of the dimming timer reaches the second preset duration, it may be considered that the smartwatch turns on the screen by using the first backlight brightness corresponding to the first light intensity data, in other words, performs S4031. When the timing duration of the dimming timer reaches the second preset duration after the smartwatch turns on the screen, the dimming timer of the smartwatch indicates the ALS of the smartwatch to collect the second light intensity data of the current ambient light and the backlight brightness of the screen to be adjusted by using the second backlight brightness corresponding to the collected second light intensity data.

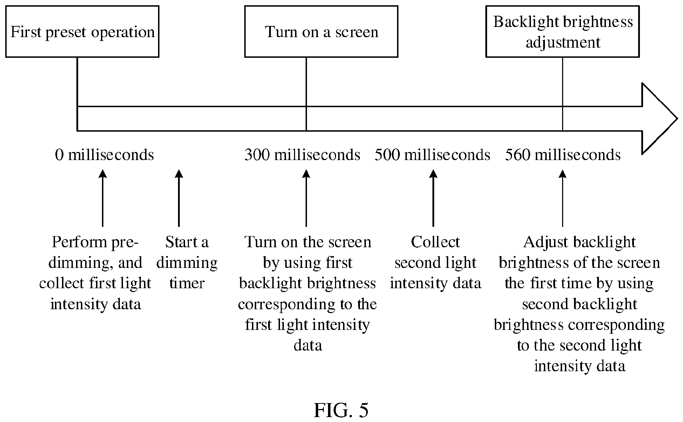

For example, the first preset duration is 200 milliseconds, and the second preset duration is 300 milliseconds. The smartwatch stores a dimming value used for each dimming operation (in other words, stores backlight brightness used during each screen brightness adjustment). As shown in FIG. 5, the moment at which the smartwatch receives the first preset operation of turning on the screen by the user is used as a start moment of time (that is, 0 milliseconds). The smartwatch first performs pre-dimming in response to the first preset operation. Specifically, in response to the first preset operation, the smartwatch collects the first light intensity data of the current ambient light by using the ALS, and updates the stored dimming value to the first backlight brightness corresponding to the first light intensity data. After pre-dimming, the smartwatch starts the dimming timer (in other words, enables the automatic adjustment function of screen brightness). The dimming timer starts timing. Because there is a delay in turning on the screen by the smartwatch, when the timing duration of the dimming timer reaches the second preset duration of approximately 300 milliseconds, the screen is turned on by using the first backlight brightness corresponding to the first light intensity data. When the timing duration of the dimming timer reaches the first preset duration of 200 milliseconds after the screen is turned on, the smartwatch may obtain the second light intensity data of the current environment based on the first preset period by using the ALS. In other words, when the timing duration of the dimming timer reaches a sum, 500 milliseconds, of the first preset duration and the second preset duration, the smartwatch may obtain the second light intensity data of the current ambient light based on the first preset period by using the ALS.

Herein, before turning on the screen, the smartwatch enables the automatic adjustment function of screen brightness by starting the dimming timer. After turning on the screen, the smartwatch may collect the second light intensity data in a timely manner, to adjust the backlight brightness of the screen in a timely manner by using the second backlight brightness corresponding to the second light intensity data, thereby improving user experience.

It may be understood that in S4042, the smartwatch may adjust the backlight brightness of the screen based on the second preset period by using the second backlight brightness corresponding to the second light intensity data that meets the preset condition in the second preset period. It is assumed that the second preset period includes three first preset periods. If the first preset period is 20 milliseconds, the second preset period is 60 milliseconds. With reference to the example shown in FIG. 5, after at least 500 milliseconds, the smartwatch collects the light intensity data of the current ambient light once every 20 milliseconds (the first preset period) by using the ALS, to obtain one piece of second light intensity data. In one second preset period (60 milliseconds), the smartwatch collects light intensity data of ambient light three times by using the ALS, to obtain three pieces of second light intensity data. The smartwatch selects second light intensity data that meets the preset condition from the three pieces of second light intensity data, and adjusts the backlight brightness of the screen to second backlight brightness corresponding to the second light intensity data that meets the preset condition, to implement one adjustment operation on the backlight brightness of the screen. It can be learned that after the automatic adjustment function of screen brightness is enabled, at least 560 milliseconds are required before the smartwatch adjusts the backlight brightness of the screen the first time by using the second backlight brightness corresponding to the second light intensity data.

In this embodiment of this application, if the smartwatch receives, when the smartwatch is in the automatic adjustment mode of screen brightness, the first preset operation of turning on the screen by the user, the smartwatch first performs pre-dimming. To be specific, when the dimming timer is not started, the first light intensity data of the current environment is collected by using the ALS. When the smartwatch turns on the screen, the first backlight brightness corresponding to the first light intensity data is used. When the screen is in the screen-on state, the smartwatch adjusts the backlight brightness of the screen by using the automatic adjustment function of screen brightness. To reduce power consumption of the smartwatch, when the screen is turned off, the smartwatch may disable the automatic adjustment function of screen brightness. Specifically, after S404, the method provided in this embodiment of this application may further include S406.

S406: In response to the screen being turned off, the smartwatch stops periodically collecting the second light intensity data by using the ambient light sensor.

Each time the smartwatch turns on the screen, if no user operation is received in specific duration in which the screen is in the screen-on state, the screen may be automatically turned off. For example, when the smartwatch is in the screen-on state, if no user operation is received in 10 seconds, the screen may be automatically turned off. The user may set automatic turn-off duration of the smartwatch based on an actual requirement. Alternatively, the smartwatch may receive a second preset operation of turning off the screen by the user. The second preset operation may be a tap operation of tapping a lock screen key on the smartwatch by the user. Alternatively, the second preset operation may be a gesture operation of making a wrist lowering gesture by the user. The smartwatch turns off the screen in response to the second preset operation of turning off the screen by the user. When the screen is turned off, the smartwatch disables the automatic adjustment function of screen brightness. In other words, the smartwatch stops periodically collecting the second light intensity data of the current ambient light by using the ALS.

When the screen is turned off, the smartwatch disables the automatic adjustment function of screen brightness, so that power consumption of the smartwatch can be reduced, and a battery life of the smartwatch can be extended.

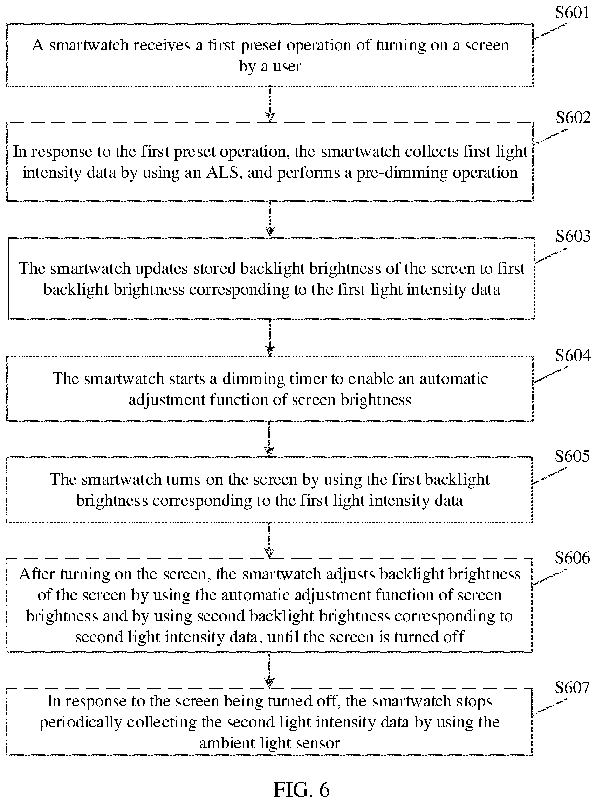

The following further describes, by using an example, the method provided in the embodiments of this application. In the example, an example in which the electronic device is the smartwatch 100 shown in FIG. 3 is used. As shown in FIG. 6, the method provided in this embodiment of this application includes the following steps.

S601: The smartwatch receives a first preset operation of turning on a screen by a user.

For descriptions of this step, refer to S401. Details are not described herein again.

S602: In response to the first preset operation, the smartwatch collects first light intensity data by using an ALS, and performs a pre-dimming operation.

For description content of this step, refer to the descriptions in S402. Details are not described herein again.

S603: The smartwatch updates stored backlight brightness of the screen to first backlight brightness corresponding to the first light intensity data.

After obtaining the first light intensity data, the smartwatch may query a mapping table provided by an LCD module, to obtain the first backlight brightness corresponding to the first light intensity data. After obtaining the first backlight brightness corresponding to the first light intensity data, the smartwatch may update the stored backlight brightness to the first backlight brightness corresponding to the first light intensity data for use in turning on the screen.

S604: The smartwatch starts a dimming timer to enable an automatic adjustment function of screen brightness.

For description content of this step, refer to the descriptions in S405. Details are not described herein again.

S605: The smartwatch turns on the screen by using the first backlight brightness corresponding to the first light intensity data.

For description content of this step, refer to the descriptions in S403. Details are not described herein again.

S606: After turning on the screen, the smartwatch adjusts backlight brightness of the screen by using the automatic adjustment function of screen brightness and by using second backlight brightness corresponding to second light intensity data, until the screen is turned off.

When the smartwatch enables the automatic adjustment function of screen brightness, when the screen of the smartwatch is in a screen-on state, the smartwatch periodically collects the second light intensity data by using the ALS under action of the automatic adjustment function of screen brightness, and adjusts the backlight brightness of the screen by using the second backlight brightness corresponding to the second light intensity data, until the screen is turned off.

Herein, for description content of periodically collecting, by the smartwatch, the second light intensity data by using the ALS and adjusting the backlight brightness of the screen by using the second backlight brightness corresponding to the second light intensity data, reference may be made to the content in S404, and details are not described herein again.

S607: In response to the screen being turned off, the smartwatch stops periodically collecting the second light intensity data by using the ambient light sensor.

For descriptions of this step, refer to S406. Details are not described herein again.

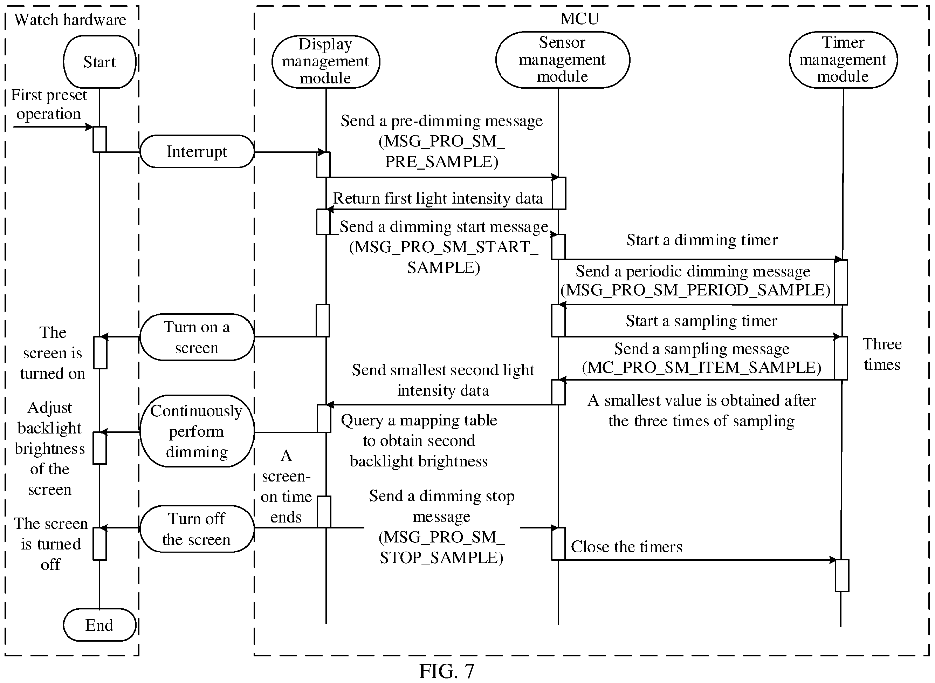

In the foregoing example, the smartwatch includes watch hardware and a micro control unit MCU. As shown in FIG. 7, the watch hardware may include the screen, a key, and a plurality of sensors (such as the ambient light sensor ALS and an acceleration sensor). The MCU includes a display management module, a sensor management module, and a timer management module.

The smartwatch receives, by using the watch hardware, the first preset operation of turning on the screen by the user. For example, the smartwatch receives, by using the screen, a first preset operation of touching the screen by the user; or the smartwatch receives, by using the key, a first preset operation of tapping the key by the user; or the smartwatch perceives, by using the acceleration sensor, a first preset operation of lifting a wrist by the user.

The watch hardware of the smartwatch sends an electrical signal to the display management module of the MCU in response to the first preset operation. The electrical signal may be used as a hardware interrupt signal. A hardware interrupt may be a trigger event generated by the hardware in a running process of a current program. The smartwatch may pause the current program to process the trigger event. After receiving the electrical signal transmitted by the watch hardware, the display management module of the MCU sends a pre-dimming message (such as MSG_PRO_SM_PRE_SAMPLE) to the sensor management module. The pre-dimming message is used to notify the sensor management module to collect the first light intensity data. After receiving the pre-dimming message, the sensor management module indicates the ALS to immediately collect first light intensity data of current ambient light once and return the first light intensity data to the display management module. After receiving the first light intensity data, the display management module queries a mapping table that records a correspondence between light intensity data and backlight brightness, determines first backlight brightness corresponding to the first light intensity data, and indicates to turn on the screen by using the first backlight brightness corresponding to the first light intensity data.

After receiving the first light intensity data, the display management module sends a dimming start message (such as MSG_PRO_SM_START_SAMPLE) to the sensor management module, to indicate to enable the automatic adjustment function of screen brightness. In response to the dimming start message sent by the display management module, the sensor management module indicates the timer management module to start the dimming timer. The timer management module starts the dimming timer. The dimming timer starts timing. When timing duration of the dimming timer reaches 500 milliseconds, the timer management module sends a periodic dimming message (such as MSG_PRO_SM_PERIOD_SAMPLE) to the sensor management module, and indicates, by using the periodic dimming message, the sensor management module to sample the light intensity data of the current ambient light.

After receiving the periodic dimming message, the sensor management module indicates the timer management module to start a sampling timer. The timer management module starts the sampling timer. The sampling timer periodically performs timing based on a first preset period (for example, 20 milliseconds). Each time timing duration of the sampling timer reaches one first preset period, the timer management module sends a sampling message (such as MC_PRO_SM_ITEM_SAMLE) to the sensor management module once. After receiving the sampling message, the sensor management module samples the light intensity data of the current ambient light by using the ALS, to obtain one piece of second light intensity data. After a plurality of times of sampling (for example, three times of sampling) in one second preset period (for example, 60 milliseconds, including three first preset periods), the sensor management module sends, to the display management module, smallest second light intensity data in a plurality of pieces of second light intensity data obtained through the plurality of times of sampling (for example, a smallest value is obtained after the three times of sampling). After receiving the smallest second light intensity data in the plurality of pieces of second light intensity data, the display management module queries the mapping table to obtain second backlight brightness corresponding to the smallest second light intensity data, and indicates the screen to update the backlight brightness to the second backlight brightness. The screen of the smartwatch adjusts the backlight brightness by using the second backlight brightness.

When the screen is in the screen-on state, each time a second preset period elapses, the display management module indicates the screen to update the backlight brightness to second backlight brightness corresponding to second light intensity data in the current second preset period. The screen continuously updates the backlight brightness to the second backlight brightness corresponding to the second light intensity data of the current ambient light, to continuously perform dimming on the screen until the screen is turned off.

When a screen-on time of the screen ends, the display management module indicates the screen to be turned off. In addition, the display management module sends a dimming stop message (such as MSG_PRO_SM_STOP_SAMPLE) to the sensor management module, and indicates, by using the dimming stop message, the sensor management module to stop collecting the second light intensity data. After receiving the dimming stop message, the sensor management module indicates the timer management module to close the timers. The timer management module closes the dimming timer and the sampling timer. When the sensor management module does not receive a sampling message sent by the timer management module, the sensor management module no longer collects light intensity data of a current environment by using the ALS.

It may be understood that the messages used for communication between the modules included in the MCU may be implemented through enumeration, to customize the messages used for communication between the modules. Each step or operation performed by the smartwatch may be recorded in a log of the smartwatch. The smartwatch may store the generated log in the smartwatch. When being connected to a network, the smartwatch may further send the log to another device (such as a cloud device or a server of the smartwatch).

In the foregoing embodiments, the example in which the electronic device is the smartwatch is used to describe the method provided in the embodiments of this application. The method provided in the embodiments of this application is also applicable to another electronic device with a screen. According to the method provided in the embodiments of this application, before the screen is turned on, the electronic device may perform pre-dimming by using the light intensity data (namely, the first light intensity data) collected by the ALS. When the screen is turned on, backlight brightness stored before the screen is turned off previous time is no longer used, but instead, backlight brightness corresponding to light intensity data collected during pre-dimming is used. In this manner, jump phenomena of the backlight brightness of the screen caused by different lighting environments when the electronic device is turned on twice can be reduced, so that stability of the backlight brightness of the screen is improved, and user experience is improved. In addition, the screen of the electronic device is still in the screen-off state during pre-dimming, and the light intensity data collected by the electronic device by using the ALS is not affected by the backlight brightness of the screen. Therefore, during pre-dimming, sampling only needs to be performed a few times, and it is unnecessary to perform a large quantity of times of sampling and then obtain a smallest value. Therefore, pre-dimming has little impact on power consumption, so that impact on a battery life of the electronic device that is caused by pre-dimming is reduced.

Some other embodiments of this application provide an electronic device. The electronic device includes a memory and one or more processors. The memory is coupled to the processor. The memory stores computer program code, and the computer program code includes computer instructions. When the computer instructions are executed by the processor, the electronic device may perform the functions or steps in the foregoing method embodiments. For a structure of the electronic device, refer to the structure of the smartwatch 100 shown in FIG. 3.

An embodiment of this application further provides a chip system. The chip system includes at least one processor and at least one interface circuit. The processor and the interface circuit may be interconnected by using a line. For example, the interface circuit may be configured to receive a signal from another apparatus (for example, a memory of another electronic device). For another example, the interface circuit may be configured to send a signal to another apparatus (for example, the processor). For example, the interface circuit may read instructions stored in the memory and send the instructions to the processor. When the instructions are executed by the processor, the electronic device may be enabled to perform the steps in the foregoing embodiments. Certainly, the chip system may further include another discrete component. This is not specifically limited in this embodiment of this application.

An embodiment of this application further provides a computer-readable storage medium. The computer storage medium includes computer instructions. When the computer instructions are run on the foregoing electronic device, the electronic device is enabled to perform the functions or steps in the foregoing method embodiments.

An embodiment of this application further provides a computer program product. When the computer program product runs on a computer, the computer is enabled to perform the functions or steps in the foregoing method embodiments.

It can be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into modules or units is merely logical function division. In actual implementation, there may be another division manner. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A screen brightness adjustment method, applied to an electronic device, wherein the electronic device comprises a screen and an ambient light sensor, and the method comprises:
receiving a first preset operation of turning on the screen by a user;
in response to the first preset operation, collecting first light intensity data by using the ambient light sensor, wherein the first light intensity data is used to update backlight brightness of the screen;
turning on the screen by using first backlight brightness corresponding to the first light intensity data; and
periodically collecting, after the screen is turned on, second light intensity data by using the ambient light sensor, and adjusting the backlight brightness of the screen by using second backlight brightness corresponding to the second light intensity data.

2. The method according to claim 1, wherein the periodically collecting second light intensity data by using the ambient light sensor, and adjusting the backlight brightness of the screen by using second backlight brightness corresponding to the second light intensity data comprises:
periodically collecting the second light intensity data based on a first preset period by using the ambient light sensor; and
adjusting the backlight brightness of the screen based on a second preset period by using second backlight brightness corresponding to second light intensity data that meets a preset condition in the second preset period, wherein
the second preset period comprises n first preset periods, the second light intensity data that meets the preset condition in the second preset period is smallest second light intensity data in n pieces of second light intensity data collected in the n first preset periods, and n is a positive integer.

3. The method according to claim 1 or 2, wherein the periodically collecting, after the screen is turned on, second light intensity data by using the ambient light sensor, and adjusting the backlight brightness of the screen by using second backlight brightness corresponding to the second light intensity data comprises:
after first preset duration starting from a moment at which the screen is turned on, periodically collecting the second light intensity data by using the ambient light sensor, and adjusting the backlight brightness of the screen by using the second backlight brightness corresponding to the second light intensity data.

4. The method according to any one of claims 1-3, wherein the turning on the screen by using first backlight brightness corresponding to the first light intensity data comprises:
after second preset duration starting from a moment at which the first preset operation is received, turning on the screen by using the first backlight brightness corresponding to the first light intensity data.

5. The method according to claim 3 or 4, wherein after the collecting first light intensity data by using the ambient light sensor, and before the turning on the screen by using first backlight brightness corresponding to the first light intensity data, the method further comprises:
starting a dimming timer, wherein
the dimming timer is used to time the first preset duration and the second preset duration.

6. The method according to any one of claims 1-5, wherein after the periodically collecting, after the screen is turned on, second light intensity data by using the ambient light sensor, and adjusting the backlight brightness of the screen by using second backlight brightness corresponding to the second light intensity data, the method further comprises:
in response to the screen being turned off, stopping periodically collecting the second light intensity data by using the ambient light sensor.

7. The method according to any one of claims 1-6, wherein the electronic device is a smartwatch.

8. The method according to claim 7, wherein the first preset operation is a wrist lifting operation performed by the user after the user wears the smartwatch or a tap operation performed by the user on the smartwatch.

9. An electronic device, comprising a memory and one or more processors, wherein the memory is coupled to the processor, the memory stores computer program code, the computer program code comprises computer instructions, and when the computer instructions are executed by the processor, the electronic device is enabled to perform the method according to any one of claims 1-8.

10. A computer-readable storage medium, comprising computer instructions, wherein when the computer instructions are run on an electronic device, the electronic device is enabled to perform the method according to any one of claims 1-8.
